# EUROPÄISCHE PATENTSCHRIFT

(11) **EP 1 189 728 B1**
(45) Veröffentlichungstag und Bekanntmachung des Hinweises auf die Patenterteilung: **08.01.2003**
(21) Anmeldenummer: 00925021.8
(22) Anmeldetag: 24.05.2000
(51) Int. Cl.: B23Q 39/04

(54) **RUNDTAKTWERKZEUGMASCHINE**
ROTARY INDEXING MACHINE TOOL
MACHINE A TRANSFERT ROTATIF

(30) Priorität: 01.06.1999 CH 102499
(43) Veröffentlichungstag der Anmeldung: 27.03.2002
(73) Patentinhaber: K.R. PFIFFNER AG, 8801 Thalwil (CH)
(72) Erfinder: PIGUET, Pierre, CH-4654 Lostorf (CH)
(74) Vertreter: EGLI-EUROPEAN PATENT ATTORNEYS
(86) Internationale Anmeldenummer: CH0000291
(87) Internationale Veröffentlichungsnummer: WO00073019

(56) Entgegenhaltungen:
- EP-A- 0 607 793
- EP-A- 0 834 379
- DE-A- 2 033 722
- DE-A- 19 504 368
- US-A- 2 701 505

## Beschreibung

Die Erfindung betrifft eine Rundtaktwerkzeugmaschine mit zumindest einem taktweise um eine Rotationsachse schaltbaren Drehteller, an dem mehrere Werkstückhalterungen angeordnet sind, sowie mit mehreren, um eine Peripherie des Drehtellers herum angeordneten Werkzeughalterungen, wobei Antriebsmittel zur Ausführung von relativen Zustellbewegungen zwischen den Werkzeughalterungen und den Werkstückhalterungen vorhanden sind. Ausserdem betrifft die Erfindung eine Rundtaktwerkzeugmaschine, wie sie im Oberbegriff von Anspruch 3 beschrieben ist. Die Erfindung bezieht sich in besonderem Masse auf solche Werkzeugmaschinen, die zur Bearbeitung von kleinen Werkstücken, wie beispielsweise Uhren oder Brillengestellen, vorgesehen sind.

Derartige Werkzeugmaschinen sind vielfach vorbekannt und werden vor allem zur gleichzeitigen Dreh-, Fräs- und/oder Bohrbearbeitung von mehreren Werkstücken eingesetzt. Selbstverständlich können auch andere spanende Bearbeitungsverfahren, wie beispielsweise Sägen, vorgesehen sein. Bei Rundtaktwerkzeugmaschinen sind üblicherweise die Werkstücke in Werkstückhalterungen angeordnet, die gleichmässig am Umfang des zumindest einen Drehtellers verteilt sind. Der Abstand, den aufeinanderfolgende Werkstückhalterungen zueinander aufweisen, ergibt sich aus dem Drehwinkel, um den der Drehteller pro Takt weitergedreht wird. Die Werkzeughalterungen der Werkzeuge sind an einer zum Maschinengestell gehörenden ortsfesten Trageinrichtung befestigt. Damit bei jeder taktweisen Weiterschaltung des Drehtellers die Werkstückhalterungen jeweils vor einem Werkzeug zu liegen kommen, sind die Werkzeughalter an der Trageinrichtung um den gleichen Teilungswinkel versetzt, wie die Werkstückhalter am Drehteller. Dadurch ist es möglich, dass nach jedem Weiterschalten des Drehtellers sich jedes Werkstück vor einem Werkzeug befindet und bearbeitet werden kann.

Bei einer derartigen vorbekannten Werkzeugmaschine ist vorgesehen, dass die Schnittgeschwindigkeit durch das Werkzeug erzeugt wird, wobei das Werkzeug zudem Zustell- bzw. Positionierbewegungen in 3 verschiedenen translatorische Achsen sowie eine Schwenkbewegung um eine Schwenkachse des Werkzeugträgers ausführen kann. Da für jede der Achsen eine Antriebseinrichtung erforderlich ist, wird durch dieses Maschinenkonzept der kleinste mögliche Teilungswinkel durch den Platzbedarf für die Antriebseinrichtungen der Werkzeuge vorgegeben. Dies ist insbesondere dann nachteilig, wenn die Maschine für die Bearbeitung kleiner Werkstücke vorgesehen ist. Man ist deshalb gezwungen, entweder für den Drehteller einen verhältnismässig grossen Radius, oder bei einem kleineren Drehteller weniger Arbeitsstationen als gewünscht vorzusehen. Ein grosser Drehteller kann sich auf die Steifigkeit der Maschine nachteilig auswirken, während sich eine geringe Anzahl an Arbeitspositionen negativ auf die Produktivität der Maschine niederschlägt.

Es ist ausserdem bereits eine Rundtaktmaschine bekannt, bei der zwei sich gegenüberliegende Drehteller vorgesehen sind, deren beide Rotationsachse miteinander fluchten. Bei dieser Maschine ist es möglich, an einer Übergabestation ein Werkstück von einer Werkstückhalterung des einen Drehtellers an eine Werkstückhalterung des anderen Drehtellers zu übergeben. Im Unterschied zur zuvor erörterten Maschine wird hier die Schnittgeschwindigkeit durch Rotation des Werkstückes erzeugt. Es ist vorgesehen, dass die Übergabe eines Werkstückes von einem Drehteller zum anderen Drehteller bei rotierenden Spindeln erfolgt.

An diesem Maschinenkonzept kann als nachteilig empfunden werden, dass die Anzahl an möglichen Werkstückspindeln aufgrund der in Relation zur Verfügung stehendem Raum verhältnismässig grossen Anzahl an Werkzeughaltern beschränkt ist. Ausserdem besteht bei dieser Maschine die Gefahr, dass bei der Übergabe des Werkstückes aufgrund der rotierenden Spindeln am Werkstück Marken entstehen.

Der Erfindung liegt deshalb die Aufgabe zugrunde, eine Rundtaktwerkzeugmaschine zu schaffen, mit der auf verhältnismässig kleinen Raum eine vergleichsweise grosse Anzahl an Bearbeitungsstationen geschaffen werden kann.

Gemäss einem ersten Aspekt wird diese Aufgabe erfindungsgemäss dadurch gelöst, dass mit einer überwiegenden Anzahl der Werkzeughalterungen jeweils nur eine translatorische Bewegung, vorzugsweise jeweils entlang einer auf den Drehteller gerichteten Achse, ausführbar ist, und dass mit einer überwiegenden Anzahl der Werkstückhalterungen ausschliesslich jeweils eine rotative und eine translatorische Zustellbewegung ausführbar ist. Durch die Wahl dieser einzelnen Bewegungsachsen sowie durch die vorgesehene Aufteilung der Bewegungsachsen auf Werkzeug und Werkstück ist es möglich die einzelnen Bearbeitungsstationen sehr kompakt zu bauen und trotzdem ein breites Spektrum an Relativbewegungen zu ermöglichen.

Die Aufgabe wird bei einer Rundtaktmaschine mit den Merkmalen von Anspruch 1 oder 2 auch dadurch gelöst, dass die Rotationsachsen der beiden Drehteller zwar parallel, jedoch zueinander versetzt, angeordnet sind, wie es in Anspruch 3 angegeben ist. Hierdurch ist es möglich, die Drehteller so anzuordnen, dass höchstens eine teilweise Uberdeckung der beiden Drehteller stattfindet, wodurch die Drehteller sehr nahe zueinander angeordnet werden können. Trotz der Nähe ist ausreichend Platz vorhanden, um an einem oder beiden Drehtellern eine grosse Anzahl an Werkzeughaltern und damit auch an Werkstückhaltern vorzusehen. Im Gegensatz zu unmittelbar gegenüberliegenden Drehtellern können hier die zu unterschiedlichen Drehtellern gehörenden Werkzeughalter nicht miteinander kollidieren.

Eine bezüglich des Aufwandes besonders einfache Konstruktion lässt sich erreichen, wenn der eine Drehteller an einer ersten Trageinrichtung und der andere Drehteller an einer zweiten Trageinrichtung gelagert ist. Die Werkzeughalteeinrichtungen zur Bearbeitung von Werkstücken, die in Werkstückhalteeinrichtungen des ersten Drehtellers angeordnet sind sollten dann an der Trageinrichtung des zweiten Drehtellers befestigt sein.

Um Werkstücke ohne das Eingreifen eines Bedieners an beiden Drehtellern bearbeiten zu können, sollten die beiden Drehteller vorzugsweise in einer Position anordenbar sein, in der zumindest eine, vorzugsweise nur eine, Werkstückhalterungen des einen Drehtellers gegenüber einer gleichen Anzahl von Werkstückhalterungen, vorzugsweise nur einer Werkstückhalterung, des anderen Drehtellers angeordnet ist. In diesem Zusammenhang kann unter "gegenüber" vorzugsweise verstanden werden, dass Längs- bzw. Rotationsachsen der entsprechenden Werkstückhalterungen zumindest im wesentlichen miteinander fluchten.

Eine besonders kompakte Ausführung einer erfindungsgemässen Werkzeugmaschine mit einer grossen Anzahl an unterschiedlichen Bearbeitungsmöglichkeiten lässt sich erreichen, wenn sowohl eine Aufteilung der Bewegungen von Werkzeughalterungen und Werkstückhalterungen gemäss Anspruch 1 als auch eine Anordnung der Rotationsachsen der beiden Drehteller gemäss Anspruch 3 vorgesehen ist.

Aus den abhängigen Ansprüchen ergeben sich weitere bevorzugte Ausgestaltungen der Erfindung.

Die Erfindung wird anhand den in den Figuren schematisch dargestellten Ausführungsbeispielen näher erläutert; es zeigen:
- Fig. 1: ein Teil einer erfindungsgemässen Rundtaktwerkzeugmaschine in einer Vorderansicht;
- Fig. 2: die Maschine von Fig. 1 in einer Seitenansicht;
- Fig. 3: die Maschine von Fig. 1 in einer Rückansicht;
- Fig. 4: eine Draufsicht auf eine Werkstückhalterung der Maschine aus den Fig. 1-3 mit einem davor angeordneten Fräswerkzeug.

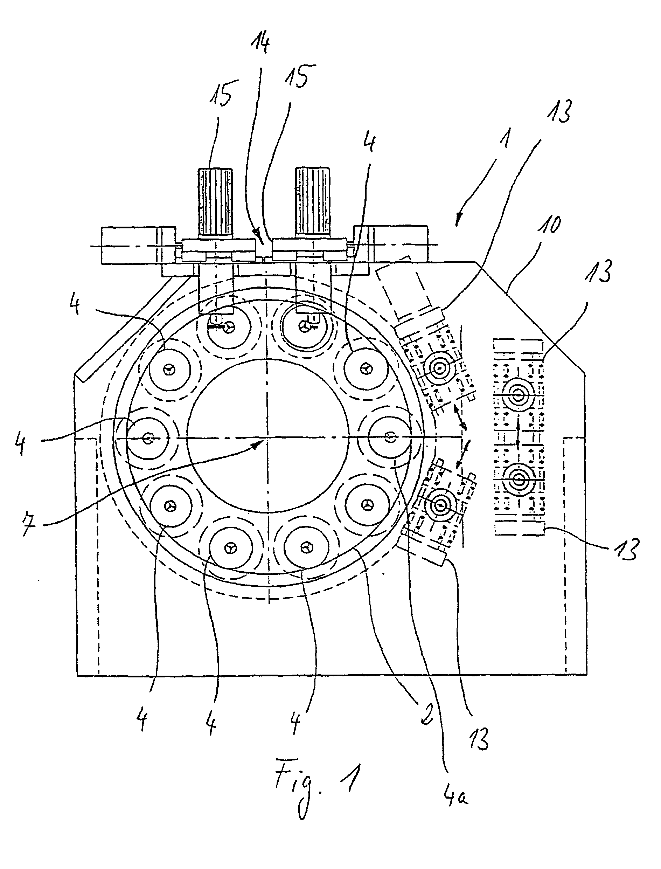

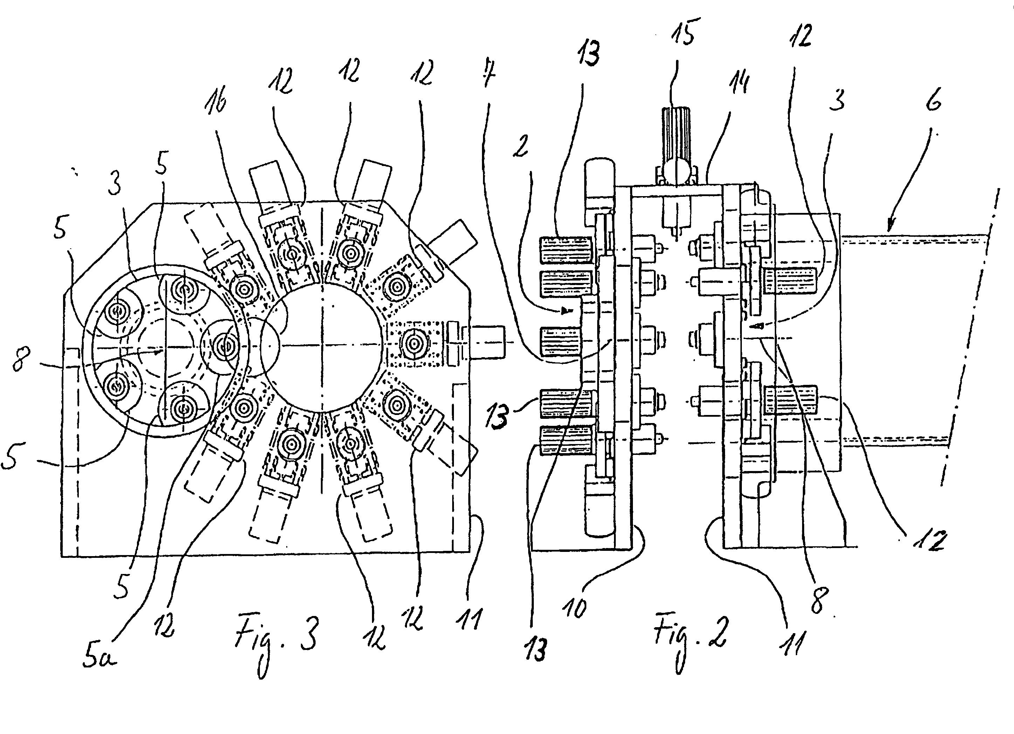

In den Fig. 1 bis 3 ist ein Rundtaktautomat 1 gezeigt, der zwei im wesentlichen vertikal ausgerichtete, achsversetzte Drehteller 2, 3 aufweist. An jedem der Drehteller 2, 3 sind im Bereich von dessen Umfang Werkstückhalterungen 4, 5 befestigt, die zur Aufnahme von Werkstücken vorgesehen sind. Hinter dem einen Drehteller 3 ist eine Einrichtung 6 zur Zuführung von Stangenmaterial für jede Werkstückhalterung 5 dieses Drehtellers 3 vorgesehen. Sämtliche Bewegungsachsen der Maschine werden von einer nicht näher dargestellten gemeinsamen zentralen Maschinensteuerung gesteuert und koordiniert.

Üblicherweise soll an beiden Drehtellern 2, 3 jedes Werkstück von jedem Werkzeug bearbeitet werden. Hierzu können beide Drehteller 2, 3 durch eine Drehbewegung um ihre Rotationsachse 7, 8 jeweils um eine Taktung weitergeschaltet werden. Dadurch kommen die Werkstückhalterungen 4, 5 jeweils an der Position zu liegen, an der die in Drehrichtung vor der entsprechenden Werkstückhalterung angeordnete weitere Werkstückhalterung des Drehtellers 2, 3 zuvor positioniert war. Somit durchläuft jedes Werkstück an dem Drehteller 2 zehn und am Drehteller 3 fünf Positionen.

Die kreisringförmigen Drehteller 2, 3 sind jeweils in einer zum Maschinengestell gehörenden ortsfesten Trageinrichtung 10, 11 gelagert. Die plattenförmigen Trageinrichtungen 10, 11 sind im wesenlichen parallel zueinander ausgerichtet. An jeder Trageinrichtung 10, 11 sind Werkzeughalterungen 12, 13 zur Aufnahme von Werkzeugen, wie beispielsweise Bohrer oder Fräswerkzeuge, befestigt. Ausserdem sind an einer Brücke 14, welche am oberen Ende der beiden Trageinrichtungen 10, 11 und zwischen diesen angeordnet ist, zwei weitere Werkzeughalterung 15 vorgesehen.

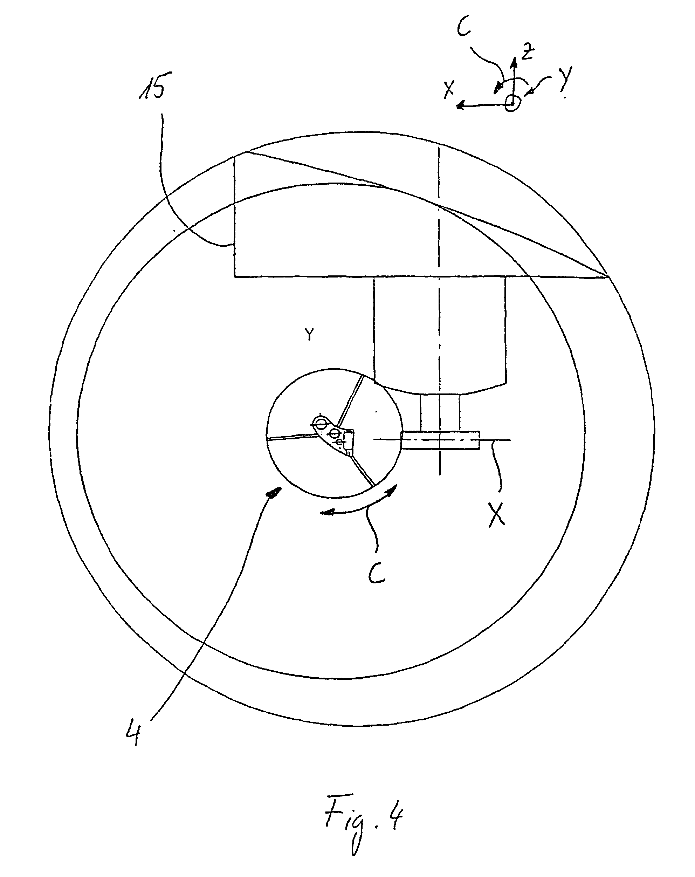

Jede der Werkzeughalterungen 12, 13, 15 weist Antriebsmittel auf, durch welche die darin angeordneten Werkzeuge entlang nur einer Achse bewegbar sind. Diese jeweilige Achse dient ausschliesslich zur Zustellung bzw. des Vorschubes des Werkzeuges an das jeweilige Werkstück. Im Ausführungsbeispiel sind die Werkzeughalterungen 15 entlang einer X-Achse, welche vom Umfang eines Werkstückes aus radial auf dessen Längsachse oder parallel zu dieser Richtung gerichtet sind, bewegbar. Die Werkzeughalterungen 15 dienen deshalb vor allem zur Fräsbearbeitung (vgl. Fig. 4). Bei den Werkzeughalteeinrichtungen 12, 13 hingegen sind die Werkzeuge entlang einer Y-Achse, d. h. einer zur Längsachse des Werkstückes parallelen bzw. identischen Achse, zustell- und positionierbar.

Zudem ist jede dieser Werkzeughalterungen 12, 13, 15 mit einem Antriebsmittel zur Erzeugung der Schnittgeschwindigkeit versehen. Diese Bewegung ist eine Rotation des jeweiligen Werkzeuges um seine Längsachse. Wie in Fig. 4 dargestellt kann bei den Werkzeugen der Werkzeughalter 15 die Längsachse im wesentlichen orthogonal zur Y-Achse ausgerichtet sein. Die rotative Antriebsbewegung der Werkzeuge der Werkzeughalter 12, 13 erfolgt jedoch um die Y-Achse bzw. einer hierzu parallelen Achse.

Auch die Werkstückhalterungen 4, 5 sind jeweils mit Antriebsmitteln versehen. Mit Hilfe dieser Antriebsmittel führen die Werkstückhalterungen Zustell- bzw. Vorschub- oder Positionierbewegungen entlang der translatorischen Y-Achse sowie einer rotatorischen C-Achse aus. Wie am besten in Fig. 4 zu erkennen ist, sind die X-Achse des Werkzeuges und Y-Achse des Werkstückes orthogonal zueinander ausgerichtet. Die C-Achse des Werkstückes ist eine rotative Zustell- bzw. Vorschubbewegung des Werkstückes um die orthogonal zur Zeichenebene von Fig. 4 ausgerichtete Y-Achse.

Sämtliche Achsen der Werkstück- und Werkzeughalterungen 4, 5, 12, 13, 15 sind angetriebene Achsen, d.h. sie können während einer Bearbeitung eines Werkstückes gleichzeitig oder nacheinander betätigt werden. Für die Erzeugung der für eine Bearbeitung erforderlichen Vorschubbewegung stehen somit die X-, Y- und C-Achsen zur Verfügung.

Es ist vorgesehen, dass - bis auf die beiden an der Brücke 14 angeordneten Werkzeughalterungen 15 sowie einer Säge 16 (Fig. 3) zur Trennung der Werkstücke vom Stangenmaterial - sämtliche Werkzeughalterungen 12, 13, die für die Bearbeitung der in einem der Drehteller 2, 3 eingespannten Werkstücke bestimmt sind, an der Trageinrichtungen 10, 11 des jeweils anderen Drehtellers 2, 3 befestigt sind. So gehören die in Fig. 1 gezeigten und an der Trageinrichtung 10 angebrachten Werkzeughalterungen 13 zu dem in Fig. 3 dargestellten Drehteller 3. Sie befinden sich unmittelbar gegenüber dem Drehteller 3 und korrespondieren mit den aufgrund der Taktung vorgegebenen vier Haltepositionen der Werkstückhalterungen 5. Umgekehrt gehören die in Fig. 3 erkennbaren Werkzeughalterungen 12 zu dem in Fig. 1 geneigten Drehteller 2. Die Werkzeughalteeinrichtungen 12 sind ebenfalls jeweils so angeordnet, dass bei jeder Taktung des Drehtellers 2 ein Werkstück gegenüber einem der neun Werkzeughalteeinrichtungen zu liegen kommt.

Die beiden Drehteller haben jedoch jeweils eine weitere Halte- oder Taktposition. In dieser weiteren Position fluchtet eine spindelachse einer Werkstückhalterung des einen Drehtellers 2, 3 mit einer Spindelachse einer Werkstückhalterung des anderen Drehtellers 2, 3. Im Ausführungsbeispiel nehmen die mit 4a und 5a bezeichneten und in Fig. 1 und Fig. 3 gezeigten Werkstückhalterungen diese Positionen ein. Dadurch ist es möglich das Werkstück, das sich in der Werkstückhalterung 5a befindet, an die Werkstückhalterung 4a des anderen Drehtellers 2 zu übergeben. Vor der Übergabe findet am übergebenden Werkstückhalter 5a noch ein Vorschub seines nicht näher dargestellten Stangenmaterials statt. Zur Ubergabe werden dann die beiden Werkstückhalterungen 4a, 5a aufeinanderzu gefahren und durch Öffnen und Schliessen der Spanneinrichtungen der beiden Werkstückhalterungen 4a, 5a das Werkstück von einer zur anderen Halterung übergeben. Bevor die Halterungen wieder voneinander weg gefahren werden, wird mit der in Fig. 3 als Kreis angedeuteten Säge 16 das Werkstück vom Stangenmaterial getrennt. Dieses Werkstück kann nun im zweiten Drehteller auch im Bereich seiner anderen Stirnseite bearbeitet werden.

## Patentansprüche

1. Rundtaktwerkzeugmaschine mit zumindest einem taktweise um eine Rotationsachse schaltbaren Drehteller, an dem mehrere Werkstückhalterungen angeordnet sind, sowie mit mehreren, um den Drehteller herum angeordneten Werkzeughalterungen, wobei Antriebsmittel zur Ausführung von relativen Zustellbewegungen zwischen den Werkzeughalterungen und dem Werkstückhalterungen und rotative Antriebsmittel zur Erzeugung einer Schnittgeschwindigkeit vorhanden sind,
**dadurch gekennzeichnet, dass**, abgesehen von den rotativen Antriebsmitteln zumindest mit einer überwiegenden Anzahl der Werkzeughalterungen (12, 13, 15) jeweils nur eine translatorische Bewegung entlang jeweils einer Achse ausführbar ist, und dass mit einer überwiegenden Anzahl der Werkstückhalterungen (4, 5) ausschliesslich jeweils eine rotative und eine translatorische Zustellbewegung ausführbar ist.

2. Rundtaktwerkzeugmaschine nach Anspruch 1, **dadurch gekennzeichnet, dass** die translatorischen Bewegungen der überwiegenden Anzahl der Werkzeughalterungen (12, 13, 15) jeweils entlang einer auf den Drehteller gerichteten Achse stattfindet.

3. Rundtaktwerkzeugmaschine nach einem oder beiden der vorhergehenden Ansprüche 1 und 2, **gekennzeichnet durch** zumindest zwei um jeweils eine Rotationsachse taktweise schaltbaren Drehtellern, an denen jeweils mehrere Werkstückhalterungen angeordnet sind, mehrere, jeweils um die Peripherie der beiden Drehteller herum angeordneten Werkzeughalterungen, sowie Antriebsmittel zur Ausführung von relativen Bewegungen zwischen Werkzeughalterungen und Werkstückhalterungen, bei der jeder Drehteller eine Ubergabestation aufweist, an der von einem Drehteller an den anderen Drehteller ein Werkstück übergebbar ist, wobei
die Rotationsachsen (7, 8) der beiden Drehteller (2, 3) im wesentlichen parallel zueinander versetzt angeordnet sind.

4. Rundtaktwerkzeugmaschine nach Anspruch 3, **dadurch gekennzeichnet, dass** die beiden Drehteller (2, 3) in einer Position anordenbar sind, in der zumindest eine, vorzugsweise nur eine, Werkstückhalterung (4, 5) des einen Drehtellers (2, 3) gegenüber einer gleichen Anzahl von Werkstückhalterungen (4, 5), vorzugsweise nur einer Werkstückhalterung (4, 5), des anderen Drehtellers (2, 3) angeordnet ist.

5. Rundtaktwerkzeugmaschine nach einen oder beiden der vorhergehenden Ansprüche 3 und 4, **dadurch gekennzeichnet, dass** der eine Drehteller (2, 3) an einer ersten Trageinrichtung (10, 11) und der andere Drehteller an einer zweiten Trageinrichtung (10, 11) gelagert ist, und dass Werkzeughalterungen (4, 5) zur Bearbeitung von Werkstücken, die in Werkstückhalterungen (4, 5) des ersten Drehtellers (2, 3) angeordnet sind, an der Trageinrichtung (10, 11) des zweiten Drehtellers (2, 3) befestigt sind.

6. Rundtaktwerkzeugmaschine nach Anspruch 5, **dadurch gekennzeichnet, dass** Werkzeughalterungen (12, 13, 15) zur Bearbeitung von Werkstücken, die in Werkstückhalterungen (4, 5) des zweiten Drehtellers (2, 3) angeordnet sind, an der Trageinrichtung (10, 11) des ersten Drehtellers befestigt sind.

7. Rundtaktwerkzeugmaschine nach einem oder mehreren der vorhergehenden Ansprüche 3 bis 6, **dadurch gekennzeichnet, dass** die beiden Drehteller (2, 3) im wesentlichen vertikal ausgerichtet sind.

8. Rundtakzwerkzeugmaschine nach einem oder mehreren der vorhergehenden Ansprüche, **gekennzeichnet durch** eine Zuführeinrichtung für Stangenmaterial.

9. Rundtaktmaschine nach Anspruch 8, **dadurch gekennzeichnet, dass** mehreren, vorzugsweise sämtlichen, einem Drehteller (2, 3) zugeordneten Werkstückhalterungen (12, 13, 15) Stangenmaterial zuführbar ist.

## Claims

1. A rotary machine tool with at least one rotary table switchable in cycles about a rotation axis, on which several workpiece holders are arranged, and also with several tool holders arranged around the rotary table, whereby drive means for the execution of relative feed motions between the tool holders and the workpiece holders and rotary drive means for generating a cutting speed are provided,
**characterised in that**,
apart from the rotary drive means, only a translatory motion along an axis can be executed at least with an overwhelming number of the tool holders (12, 13, 15), and that solely a rotary and a translatory feed motion can be executed with an overwhelming number of the workpiece holders (4,5).

2. The rotary machine tool according to claim 1, **characterised in that** the translatory motions of the overwhelming number of the tool holders (12, 13, 15) each take place along an axis pointing to the rotary table.

3. The rotary machine tool according to one or both of the preceding claims 1 and 2, **characterised by** at least two rotary tables each switchable in cycles about a rotation axis, on each of which several workpiece holders are arranged, by several tool holders arranged around the periphery of each of the two rotary tables, and by drive means for the execution of relative motions between tool holders and workpiece holders, whereby each rotary table has a transfer station at which a workpiece can be transferred from one rotary table to the other rotary table, whereby the rotation axes (7, 8) of the two rotary tables (2, 3) are arranged offset essentially parallel to one another.

4. The rotary machine tool according to claim 3, **characterised in that** the two rotary tables (2, 3) can be arranged in a position in which at least one, preferably only one, workpiece holder (4, 5) of a rotary table (2, 3) is arranged opposite an equal number of the workpiece holders (4, 5), preferably only one workpiece holder (4, 5), of the other rotary table (2, 3).

5. The rotary machine tool according to one or both of the preceding claims 3 and 4, **characterised in that** the one rotary table (2, 3) is mounted on a first supporting device (10, 11) and the other rotary table on a second supporting device (10, 11), and that the tool holders (4, 5) for the processing of workpieces which are arranged in workpiece holders (4, 5) of the first rotary table (2, 3) are fixed to the supporting device (10, 11) of the second rotary table (2, 3).

6. The rotary machine tool according to claim 5, **characterised in that** tool holders (12, 13, 15) for the processing of workpieces which are arranged in workpiece holders (4, 5) of the second rotary table (2, 3) are fixed to the supporting device (10, 11) of the first rotary table.

7. The rotary machine tool according to one or more of the preceding claims 3 to 6, **characterised in that** the two rotary tables (2, 3) are aligned essentially vertical.

8. The rotary machine tool according to one or more of the preceding claims, **characterised by** a feed device for rod material.

9. The rotary machine tool according to claim 8, **characterised in that** rod material can be fed to several, preferably all, workpiece holders (12, 13, 15) assigned to a rotary table (2, 3).

## Revendications

1. Machine à transfert rotatif avec au moins un plateau tournant pouvant être actionné de manière cadencée autour d'un axe de rotation, sur lequel sont disposés plusieurs supports de pièce ainsi qu'avec plusieurs supports de pièce disposés autour du plateau tournant, des moyens de commande pour l'exécution de mouvements relatifs de distribution entre les supports de pièce et les supports de pièce et les moyens rotatifs de commande pour la création d'une vitesse de coupe étant disponibles,
**caractérisée en ce que**,
à l'exception des moyens rotatifs de commande, respectivement un seul mouvement translatif est réalisable avec au moins une majeure partie des supports de pièce (12, 13, 15) le long d'un axe respectif, et qu'avec une majeure partie des supports de pièce (4, 5) seul respectivement un mouvement de distribution rotatif et un mouvement translatif est réalisable.

2. Machine à transfert rotatif selon la revendication 1, **caractérisée en ce que** les mouvements translatifs de la majeure partie des supports de pièce (12, 13, 15) s'effectuent respectivement le long d'un axe dressé sur le plateau tournant.

3. Machine à transfert rotatif selon une des deux revendications précédentes 1 et 2, **caractérisée par** au moins deux plateaux tournants pouvant être actionnés respectivement de manière cadencée autour d'un axe de rotation, sur lesquels sont disposés respectivement plusieurs supports de pièce, des supports de pièce disposés respectivement autour de la périphérie des deux plateaux tournants, ainsi que des moyens de commande pour l'exécution de mouvements relatifs entre les supports de pièce et d'autres supports de pièce, dans laquelle chaque plateau tournant présente une station de transfert, sur laquelle une pièce peut être transférée d'un plateau tournant à un autre plateau tournant, les axes de rotation (7, 8) des deux plateaux tournants (2, 3) étant disposés substantiellement décalés l'un par rapport à l'autre.

4. Machine à transfert rotatif selon la revendication 3, **caractérisée en ce que** les deux plateaux tournants (2, 3) peuvent être disposés dans une position dans laquelle au moins un, de préférence un seul, des supports de pièce (4, 5) d'un plateau tournant (2, 3) est disposé en face d'un nombre égal de supports de pièce (4, 5), de préférence d'un seul support de pièce (4, 5) de l'autre plateau tournant (2, 3).

5. Machine à transfert rotatif selon une des deux revendications précédentes 3 et 4, **caractérisée en ce qu'**un des plateaux tournants (2, 3) repose sur un premier dispositif porteur (10, 11) et l'autre plateau tournant sur un deuxième dispositif porteur (10, 11) et que des supports de pièce (4, 5) sont fixés sur le dispositif porteur (10, 11) du deuxième plateau tournant (2, 3) pour l'usinage de pièces qui sont disposées dans des supports de pièce (4, 5) du premier plateau tournant (2, 3).

6. Machine à transfert rotatif selon la revendication 5, **caractérisée en ce que** des supports de pièce (12, 13, 15) pour l'usinage de pièces qui sont disposées dans des supports d'outil (4, 5) du deuxième plateau tournant (2, 3) sont fixés au dispositif porteur (10, 11) du premier plateau tournant.

7. Machine à transfert rotatif selon une ou plusieurs des revendications précédentes 3 à 6, **caractérisée en ce que** les deux plateaux tournants (2, 3) sont alignés substantiellement à la verticale.

8. Machine à transfert rotatif selon une ou plusieurs des revendications précédentes, **caractérisée par** un dispositif d'acheminement pour de la matière en barre.

9. Machine à transfert rotatif selon la revendication 8, **caractérisée en ce que** de la matière en barre peut être acheminée à une pluralité, de préférence la totalité, de supports de pièce (12, 13, 15) associés à un plateau tournant (2, 3).
